# EUROPÄISCHE PATENTSCHRIFT

(11) **EP 2 014 544 B1**
(45) Veröffentlichungstag und Bekanntmachung des Hinweises auf die Patenterteilung: **30.11.2011**
(21) Anmeldenummer: 08002288.2
(22) Anmeldetag: 07.02.2008
(51) Int. Cl.: B62K 21/26

(54) **Fahrradgriff**
Bicycle handle-bar grip
Poignée de bicyclette

(30) Priorität: 13.07.2007 DE 202007009847 U
(43) Veröffentlichungstag der Anmeldung: 14.01.2009
(73) Patentinhaber: Merida & Centurion Germany GmbH, 71106 Magstadt (DE)
(72) Erfinder: Renner, Wolfgang, 71106 Magstadt (DE)
(74) Vertreter: Schlotter, Alexander Carolus Paul

(56) Entgegenhaltungen:
- EP-A- 0 790 177
- EP-A- 1 440 877
- EP-A- 1 679 253
- EP-A- 1 712 460
- WO-A-2004/108511
- US-B1- 6 421 879

## Beschreibung

Die vorliegende Erfindung betrifft einen Fahrradgriff, der sich insbesondere für Mountainbikes, Crossräder und Trekkingräder eignet, sowie ein Verfahren zur Ausbildung eines solchen Fahrradgriffes.

Fahrradgriffe sind üblicherweise rohrförmige Elemente, die auf einer Seite geschlossen sein können und auf einen Fahrradlenker aufgesteckt werden. Eine gängige Bauform besteht aus elastischen Material und wird aufgrund der Dehnung beim Aufstecken kraftschlüssig mit dem Fahrradlenker verbunden. Die Belastbarkeit einer derartigen Verbindung hängt von mehreren Einflussfaktoren wie beispielsweise der Maßgenauigkeit von Griff und Lenkstange, deren Oberflächenrauhigkeiten, der Temperatur und Alterung der elastischen Materialen ab und ist demzufolge für erhöhte Anforderungen wenig geeignet.

Andere Bauformen weisen einen seitlichen, aus dem Greifbereich herausragenden Rand auf, an dem der Fahrradgriff zumeist mittels einer Klemmung am Lenker befestigt wird. Nachteilig hierbei ist, dass je weiter die Stelle, an welcher der Fahrradfahrer auf den Griff Kraft aufbringt, von der Klemmung entfernt ist, desto ungünstiger ist der Kraftfluss vom Griff auf den Fahrradlenker. Dabei kann zudem beobachtet werden, dass ein Griff, welcher an der inneren, zur Fahrradmitte liegenden Seite mit dem Fahrradlenker verklemmt ist, sich beim Einbringen hoher Kräfte an der äußeren Seite relativ zu einem dort angeordneten Halteelement verdreht. Gerade bei kraftintensiven Fahrmanövern kann durch ein erforderliches "Nachfassen" des Fahrers während der Fahrt gefährliche Situationen entstehen.

Um dem Fahrradfahrer die Möglichkeit zu geben, seine Griffposition während der Fahrt zu ändern, oder besonders während einer Fahrt im Gelände, den Lenker von außen fassen zu können, sind hornförmige Halteelemente bekannt, welche seitlich am Fahrradlenker montiert sind und gewöhnlich in Fahrtrichtung ragen. Üblicherweise erfolgt die Befestigung bekannter, auf den Fahrradlenker aufgesteckter Halteelemente mittels einer Klemmverbindung.

Dokument EP 1 712 460 zeigt einen Fahrradgriff gemäß dem Oberbegriff von Anspruch 1.

Ferner ist es bekannt, am Fahrradgriff Griffmulden oder Auflageansätze auszubilden, zum Abstützen und/ oder zur Vermeidung eines Abrutschens der Hand des Fahrradfahrers. Durch eine solche ergonomische Griffgestaltung wird einerseits ein sicherer und komfortabler Halt des Fahrradfahrers am Fahrradlenker unterstützt, andererseits kann dieser über den Griff auch deutlich höhere Kräfte in den Fahrradlenker einleiten. Die dadurch erreichte verbesserte Integration des Fahrers mit dem Fahrrad führt zu erhöhten Anforderungen an die Befestigung der Fahrradgriffe am Fahrradlenker.

Die vorliegende Erfindung stellt sich die Aufgabe, einen Fahrradgriff mit Halteelement zur Verfügung zu stellen, welcher die Kraftübertragung vom Fahrradfahrer auf den Fahrradlenker verbessert.

Diese Aufgabe wird erfindungsgemäß durch den Gegenstand des Anspruchs 1 gelöst. Vorteilhafte Weiterbildungen sind Gegenstand der Unteransprüche.

Die vorliegende Erfindung stellt einen Fahrradgriff zur Verfügung, welcher insbesondere für Mountainbikes geeignet ist. Der Fahrradgriff umfasst ein bevorzugt auf beiden Seiten offenes, rohrförmiges Griffelement zum Aufstecken an einem Fahrradlenker, welches einen ersten Bereich aufweist, an dem es mit dem Lenker verbunden wird. Ferner umfasst der Fahrradgriff ein Halteelement, welches ebenfalls einen ersten Bereich aufweist, an dem es mit dem Fahrradlenker verbunden ist. Dabei weisen sowohl das Griffelement als auch das Halteelement jeweils einen zweiten Bereich auf, an dem sie miteinander verbunden sind.

Der erste Bereich des rohrförmigen Griffelements, welches bevorzugt an beiden Seiten offen ist, ist vorzugsweise am inneren, zur Fahrradmitte liegenden Rand des Griffelements ausgebildet. Das Griffelement wird an diesem ersten Bereich vorzugsweise mittels einer Klemmverbindung kraftschlüssig mit dem Fahrradlenker verbunden. Hierzu eignen sich beispielsweise Schraubklemmen, bei denen die Verschraubungsachse radial oder axial zum Lenker verläuft. Ebenso sind auch stoffschlüssige Verbindungen, wie eine Verklebung oder Verschweißung denkbar, oder entsprechende formschlüssige Gestaltungen von Lenkstange und Griff.

Zur Verbesserung der ergonomischen Gestaltungsmöglichkeiten ist vorzugsweise auf dem rohrförmigen Griffelement, welches bevorzugt aus einem relativ harten, belastbaren Material besteht, drehfest ein aus wenigstens einem geeigneten weicheren Kunststoffmaterial bestehendes Greifelement aufgebracht. Das Material bzw. die Materialkombination des Greifelements sowie dessen Oberflächenstruktur ist so gewählt, dass die gewünschten Eigenschaften des Fahrradgriffs erreicht werden. So ist die Oberfläche des Greifelements vorzugsweise so ausgebildet, dass der Fahrradfahrer einen sicheren Halt am Griff findet sowie ein Abrutschen der Hand auch im feuchten Zustand und beim Tragen von Handschuhen verhindert wird. Ferner weist die Oberfläche bevorzugt eine für den Fahrradfahrer angenehme Oberflächenstruktur auf.

Das Material bzw. die Materialkombination des Greifelements ist bevorzugt so gewählt, dass es einerseits die Übertragung von Erschütterungen des Fahrrads über den Fahrradlenker auf die Hand des Fahrradfahrers dämpft, andererseits jedoch die vom Fahrer aufgebrachten Kräfte über das Griffelement auf den Lenker überträgt. Grundsätzlich ist es erfindungsgemäß jedoch auch möglich, ein einteiliges Griffteil auszubilden, welches - soweit bei einem Materialkompromiss möglich - die Anforderungen an Griff- und Greifelement möglichst weitreichend erfüllen kann.

In einer ersten bevorzugten Ausführungsform weist das Greifelement eine im Wesentlichen zylinderförmige Außenkontur auf, welche bevorzugt im Bereich des untersten Glieds von Ring- und kleinem Finger in Greifstellung, also in Fahrtrichtung nach vorne weisend, eine Ausnehmung umfasst. Es ist aber auch möglich, am Greifelement in Fahrtrichtung mehrere Ausnehmungen zur Aufnahme der einzelnen Finger auszubilden, auch mit dazwischenliegenden Erhebungen, um ein seitliches Verrutschen der Finger zu vermeiden. Zum Lenkerende hin, dort, wo der äußere Bereich der Hand in Greifstellung der Hand aufliegt, ist das Greifelement bevorzugt abgeflacht ausgebildet, d. h die Oberseite ist in diesem Bereich im Wesentlichen horizontal ausgerichtet.

In einer zweiten bevorzugten Ausführungsform weist das Greifelement zusätzlich zu den Gestaltungen entsprechend der ersten Ausführungsform einen Auflageansatz an der Stelle auf, auf welcher der äußeren Bereich der Handwurzel in Greifstellung der Hand aufliegt. Eine solche Gestaltung schafft einerseits einen vergrößerten Bereich für einen besseren Halt des Fahrers und einen verbesserten Kraftfluss zwischen Fahrer und Fahrradlenker und ermöglicht ihm andererseits in entspannteren Fahrsituationen ein entlastendes Auflegen der Hand.

Erfindungsgemäß sind weitere Gestaltungen des Greifteils für einen optimalen Halt des Fahrradfahrers denkbar. Vorzugsweise wird die Form weiter an die Fahrerhand angepasst, wie beispielsweise durch einen Haltevorsprung für den Daumen, oder durch Einkerbungen auf der Oberfläche zur Vermeidung eines Abrutschens der Fahrerhand. Bevorzugt werden auch Materialen mit unterschiedlichen Eigenschaften in verschiedenen Bereichen des Greifelements eingesetzt, um die Eigenschaften des Greifelements weiter zu verbessern.

Das Griffelement weist an der äußeren, der Fahrradmitte abgewandten Seite einen zweiten Bereich auf, welcher bevorzugt außerhalb des Greifelements liegt. Am Innendurchmesser dieses zweiten Bereichs ist das Griffelement erfindungsgemäß nicht am Fahrradlenker fixiert. Dieser zweite Bereich ist so gestaltet, dass das Griffelement dort mit einem Halteelement bevorzugt formschlüssig verbunden werden kann. Es ist aber auch möglich, eine kraftschlüssige Verbindung, wie eine Klemmung, oder eine stoffschlüssige Verbindung, wie beispielsweise durch Kleben herzustellen. Der erste und der zweite Bereich sind bevorzugt auf gegenüberliegenden Seiten des Griffelements angeordnet.

Der erfindungsgemäße Fahrradgriff umfasst ferner ein Halteelement, welches bevorzugt von außen an einem Fahrradlenker aufgesteckt und mit diesem fest verbunden wird. Hierzu weist das Halteelement einen ersten Bereich auf, welcher bei aufgestecktem Halteelement bevorzugt in den Fahrradlenker ragt. An diesem ersten Bereich ist eine Einrichtung zur Befestigung des Halteelements an dem Fahrradlenker angeordnet. Auch diese Verbindung kann wahlweise kraft-, form- oder stoffschlüssig hergestellt werden. Vorzugsweise erfolgt eine kraftschlüssige Befestigung des Halteelements am Fahrradlenker, wobei die radiale Ausrichtung des Halteelements, bezogen auf die Längsachse des Fahrradlenkers, bevorzugt im Wesentlichen frei einstellbar ist. Die radiale Ausrichtung des Halteelements" bezeichnet hierbei den Winkel, den die Längsachse des Halteelements gegenüber einer durch die Mittelachse des Griffelements verlaufenden Ebene einschließt. Zum Ermöglichen besonders ergonomischer Greifstellungen des Fahrradfahrers wird das Halteelement bevorzugt im Wesentlichen in Fahrtrichtung gerichtet, wobei das Haltehorn ferner bevorzugt zur Abflachung des Greifelements bzw. zum Auflageansatz ausgerichtet ist.

In einer ersten bevorzugten Ausführungsform erstreckt sich das montierte Halteelement um ca. einen Griffdurchmesser vom Greifelement nach außen, so dass das Halteelement beim Greifen von der Seite vollständig innerhalb der Handbreite liegt.

Bei einer zweiten bevorzugten Ausführungsform erstreckt sich das Halteelement so weit vom Greifelement nach außen, dass es von den vier Fingern der Hand außerhalb des Greifelements umschlossen werden kann. Besonders bevorzugt sind die Halteelemente in allen Ausführungsformen hornförmig, d. h. etwas gekrümmt.

Eine dritte bevorzugte Ausführungsform des Halteelements ist so gestaltet, dass das Halteelement analog zur zweiten Ausführungsform ca. eine Hand breit vom Greifelement weg und von dort aus weiter nach innen verläuft. Eine solche Gestaltung ermöglicht eine Vielzahl unterschiedlicher Griffpositionen oder auch das Ablegen der Fingerspritzen auf dem Halteelement, während der Handballen auf dem Greifelement ruht.

Des weiteren weist das Halteelement erfindungsgemäß einen zweiten Bereich auf, an dem es mit dem Griffelement verbunden ist. Die Verbindung kann, wie bereits für das Griffelement ausgeführt wurde, form-, kraft- oder stoffschlüssig ausgebildet sein, muss jedoch hohe Kräfte in Umfangsrichtung aufnehmen können. Bevorzugt wird eine formschlüssige Verbindung der beiden Elemente eingesetzt. Über diese Verbindung werden die Kräfte, welche im Wesentlichen vom Fahrradfahrer auf den äußeren Bereich des Greifelements aufgebracht werden, auf das Halteelement übertragen. Der Kraftfluss vom Fahrradfahrer verläuft folglich vom äußeren Bereich des Griffteils über das Halteelement auf den Fahrradlenker. Erfindungsgemäß wird daher eine vom Fahrradfahrer in das Griffelement eingeleitete Kraft ausschließlich über den ersten Bereich des Griffelements in den Fahrradlenker und über den zweiten Bereich des Griffelements in das Halteelement eingeleitet.

Die verschiedenen Ausführungsformen von Griffelement und Halteelement bilden besonders bevorzugt Elemente eines Herstellerbaukastens. Vorzugsweise sind darin verschiedene Greifelemente auf baugleichen Griffelementen und verschiedene Halteelemente enthalten. Für Einsatzzwecke, bei denen der Fahrer kein seitliches Halteelement wünscht, kann der Herstellerbaukasten auch eine Kappe umfassen, welche entsprechend den Halteelementen an der Außenseite des Fahrradlenkers befestigt wird. Die Einrichtungen zur Befestigung des Griff- sowie des Halteelements bzw. der Kappe am Fahrradlenker finden bevorzugt für jede Kombination von Greif- und Halteelement bzw. der Kappe Verwendung.

Weitere Vorteile, Merkmale und Anwendungsmöglichkeiten der vorliegenden Erfindung ergeben sich aus der nachfolgenden Beschreibung in Zusammenhang mit den Figuren. Es zeigt:
1. drei beispielhafte Ausführungsformen von Griff- und Greifelement des erfindungsgemäßen Fahrradgriffs,
2. drei beispielhafte Ausführungsformen des Halteelements des erfindungsgemäßen Fahrradgriffs,
3. zeigt eine beispielhafte Ausführungsform der Befestigungseinrichtung des Halteelements sowie eine beispielhafte Gestaltung der Verbindung zwischen Griffelement und Halteelement, und
4. zeigt die Elemente eines beispielhaften erfindungsgemäßen Griffbaukastens.

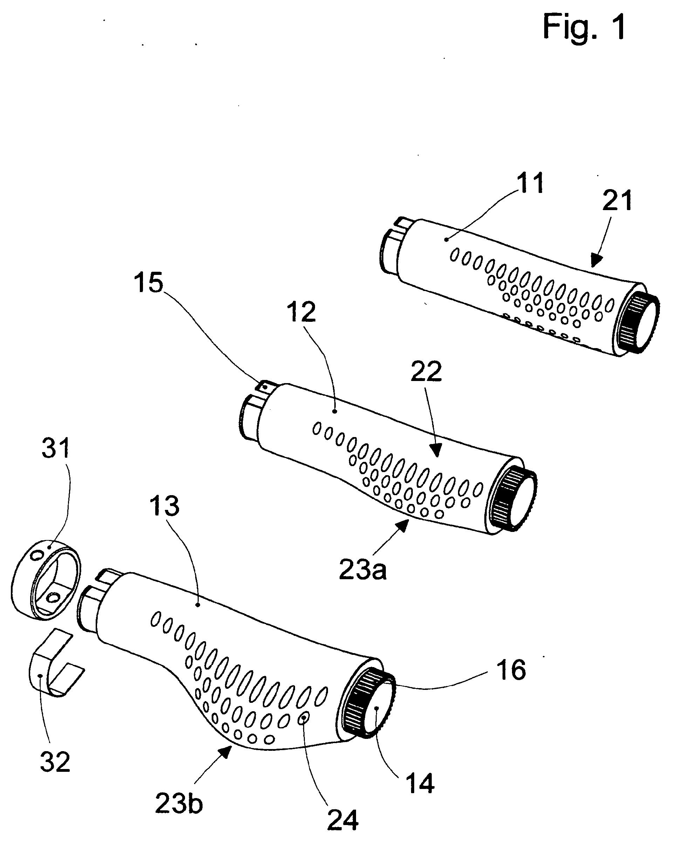

Fig. 1 zeigt drei beispielhafte Ausführungsformen des Greifelements 11, 12 und 13, welches drehfest auf dem Griffelement 14 angeordnet ist. In Fig. 1 sind rechtsseitige Griff- bzw. Greifelemente dargestellt, welche von rechts so weit auf den Fahrradlenker (nicht gezeigt) aufgesteckt werden, dass sich der Fahrradlenker über die Gesamtlänge des Griffelements 14 erstreckt und mit dem rechten Rand des Griffelements 14 abschließt. Das beispielhafte Griffelement 14 weist am linken Rand einen ersten Bereich 15 auf, an welchem es mit dem Fahrradlenker verbunden wird. In der beispielhaften Ausführungsform dient hierzu ein mit zwei gegenüberliegenden Gewindebohrungen versehener metallischer Klemmring 31, welcher über einen ebenfalls aus Metall hergestellten Klemmschutz auf den ersten Bereich des Griffelements aufgesteckt wird. In der beispielhaften Ausführungsform wird das Griffelement 14 mittels Gewindestiften (nicht dargestellt) mit dem Fahrradlenker verklemmt.

Auf der dem ersten Bereich 15 gegenüberliegenden Seite weist das Griffelement 14 einen zweiten Bereich 16 auf, welcher zur Verbindung des Griffelements 14 mit einem Halteelement dient. In der beispielhaften Ausführungsform wird diese Verbindung mittels einer Verzahnung verwirklicht, welche eine Vielzahl verschiedener Winkelstellungen des Halteelements in radialer Richtung zur Mittelachse des Griffelements 14 ermöglicht.

Das Griffelement 14 ist im Ausführungsbeispiel aus einem harten Kunststoff oder einer Leichtmetalllegierung hergestellt, welche eine feste Verbindung durch Klemmen des Griffelements 14 im ersten Bereich 15 am Lenker ermöglicht, zur Ausbildung der Verbindungsgeometrie im zweiten Bereich 16 geeignet ist sowie über eine ausreichende Steifigkeit für das Übertragen der in das Greifelement 11, 12, 13 eingebrachten Kräfte auf den Fahrradlenker verfügt.

Das Greifelement 11, 12, 13 ist aus einem eher weichen Kunststoff ausgeführt, welcher zur Übertragung der Kräfte vom Fahrradfahrer auf das Griffelement 15 geeignet ist, sich angenehm anfühlt, witterungs- sowie schweißbeständig ist und dämpfende Eigenschaften hat. An der dem Fahrer abgewandten Seite weist das Greifelement 11, 12, 13 eine Vertiefung 21 auf und an der Oberseite eine Abflachung 22. Die Vertiefung 21 sowie die Abflachung 22 dienen der Anpassung des Greifelements an die natürliche Stellung Hand beim Zugreifen. Das Greifelement 12 zeigt einen kleineren Auflageansatz 23a, das Greifelement 13 einen deutlich ausgeprägteren Auflageansatz 23b. Zur Vermeidung eines Abrutschens der Hand sind auf jedem Greifelement 11, 12, 13 eine Vielzahl von Rutschmarken 24 angeordnet.

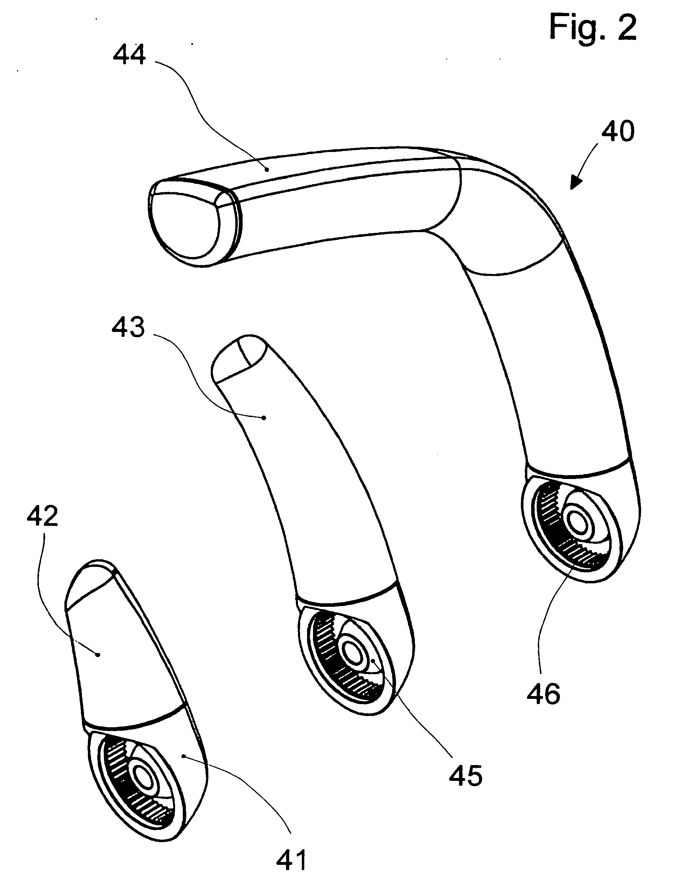

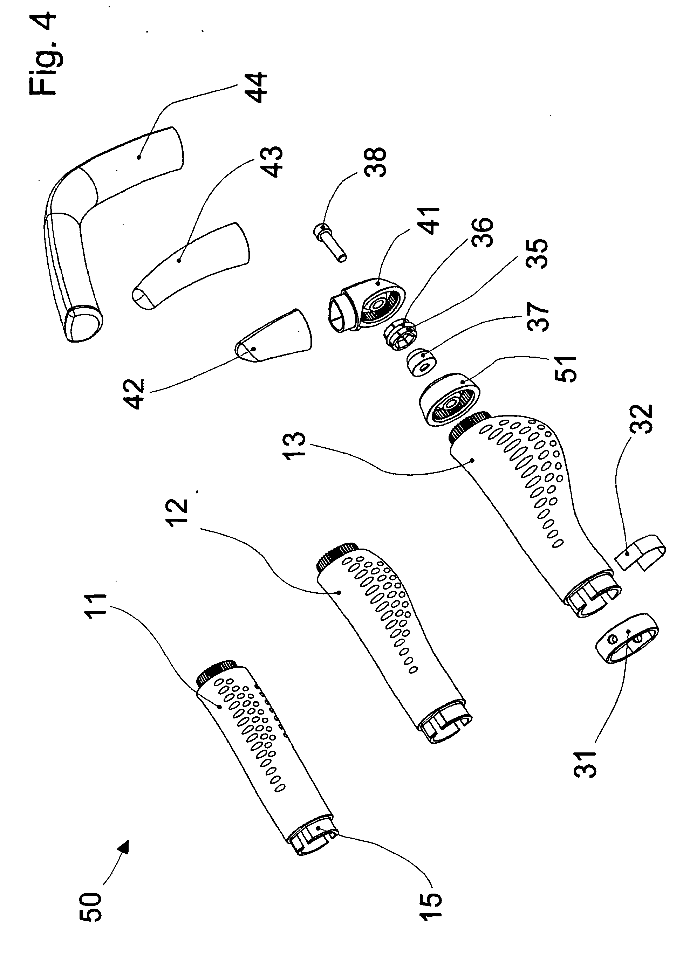

Fig. 2 zeigt verschiedene beispielhafte Ausführungsformen des Halteelements 40, welches sich aus einem Halteadapter 41 sowie Haltehörnern 42, 43 und 44 zusammensetzt, wie in Fig. 4 deutlicher zu sehen ist. Es sind drei beispielhafte Ausführungsformen von Haltehörnern 41, 42 und 43 dargestellt. Das Haltehorn 42 erstreckt sich dabei im montierten Zustand um ca. einen Griffdurchmesser vom Greifelement, das Haltehorn 43 etwa um eine Handbreite nach außen und das Haltehorn 44 ist so gestaltet, dass es ca. eine Hand breit analog zum Haltehorn 43 vom Greifelement weg und von dort aus weiter nach innen verläuft. Die Haltehörner 42 bis 44 weisen einen etwas gekrümmten Verlauf auf und die Haltehörner 41 und 42 verjüngen sich zudem nach oben hin. Im Halteadapter 41 ist ferner ein erster Bereich 45 ausgebildet, an dem das Halteelement 40 mit dem Fahrradlenker verbunden wird und ferner ein zweiter Bereich 46 ausgebildet, an dem das Halteelement 40 mit dem Griffelement 15 verbunden wird.

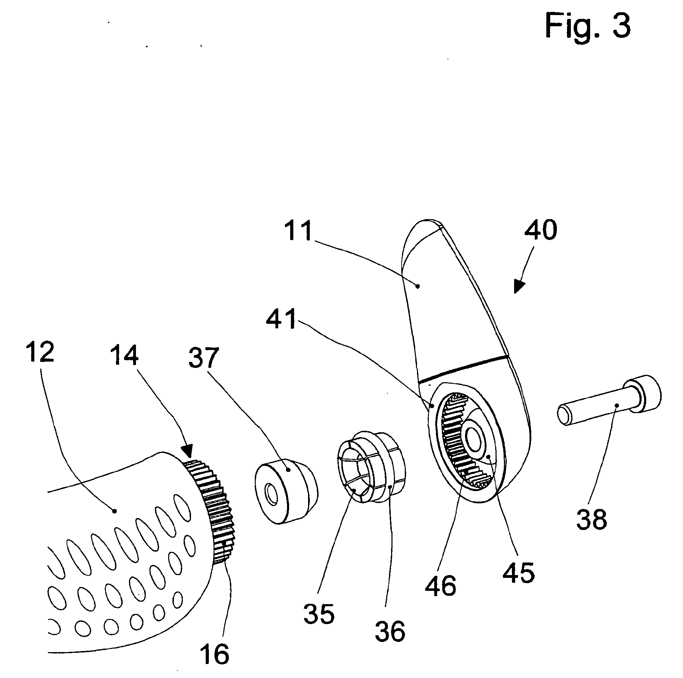

Fig. 3 zeigt eine Teilansicht eines erfindungsgemäßen Fahrradgriffs mit einem Griffelement 14, einem Greifelement 12 sowie einem Halteelement 40. Das Griffelement 14 ist in der dargestellten Anordnung so weit auf einen Fahrradlenker aufgesteckt, dass Fahrradlenker und Griffelement 14 am Rand des zweiten Bereichs 16 des Griffelements gemeinsam abschließen. Ferner ist das Griffelement 14 an seinem ersten Bereich 15 (nicht dargestellt) mit dem Fahrradlenker verbunden.

Zur Verbindung des Halteelements 40 mit den Fahrradlenker wird die mit einem Außengewinde versehene Schraube 38 durch die Bohrung im Halteelement 40 sowie durch einen Spreizdübel 35, auf dessen Umfang ein O-Ring 36 sitzt, geführt und locker mit dem Konus 37 verschraubt.

Im nächsten Schritt wird das Halteelement 40 mit den daran befestigten Elementen auf den Fahrradlenker aufgesteckt, wobei die Verzahnung im zweiten Bereich 46 des Halteelements 40 mit der Verzahnung im zweiten Bereich 16 des Griffteils 14 eingreift. Beim Aufstecken wird die Ausrichtung des Halteelements radial zur Achse des Fahrradlenkers eingestellt. Durch Eindrehen der Schraube 38 in den Konus 37 wir dieser in Richtung des ersten Bereichs 45 des Halteelements 40 gezogen. Der Spreizdübel wird dabei durch die Keilwirkung der Kegelflächen am Konus 37 sowie am ersten Bereich 45 des Halteelements im Umfang vergrößert. Der sich dabei dehnende O-Ring dient hier zum Ausgleich möglicher Querschnittstoleranzen im Fahrradlenker. Über diese Befestigungseinrichtung wird eine feste Verbindung zwischen Fahrradlenker und Halteelement 40 hergestellt.

Fig. 4 zeigt beispielhaft die Elemente eines erfindungsgemäßen Herstellerbaukastens für einen erfindungsgemäßen Fahrradgriff. Im Griffbaukasten 50 sind drei unterschiedlich geformte, jeweils auf Griffelementen 14 angeordnete Greifelemente 11, 12 und 13 sowie drei verschiedene Formen von Haltehörnern 42, 43 und 44, welche mit einem Halteadapter 41 zu einem Halteelement 40 verbindbar sind, miteinander kombinierbar. Ebenfalls im Griffbaukasten 50 enthalten ist eine Kappe 51, welche ebenfalls fest mit dem Fahrradlenker verbunden wird und in den Fällen mit dem gewünschten Greifelement kombiniert werden kann, in denen der Fahrradfahrer kein seitliches Haltehorn wünscht. Ferner umfasst der Griffbaukasten 50 einen Klemmring 31 mit Klemmschutz 32 zur Befestigung des Griffelements 14 am Fahrradlenker sowie die Befestigungselemente 35 - 38 zur Verbindung des Halteelements 40 mit dem Fahrradlenker.

## Patentansprüche

1. Fahrradgriff, insbesondere für Mountainbikes, mit einem rohrförmigen Griffelement (14) und einem Halteelement (40) zum Aufstecken an einen Fahrradlenker, wobei sowohl das Griffelement (14) als auch das Halteelement (40) jeweils einen ersten Bereich (15, 45) aufweisen, an dem sie mit dem Fahrradlenker verbindbar sind **dadurch gekennzeichnet, dass**
sowohl das Griffelement (14) als auch das Halteelement (40) jeweils einen zweiten Bereich (16, 46) aufweisen, an dem sie miteinander verbunden sind, wobei
der erste Bereich (15) und der zweite Bereich (16) des Griffelements (14) auf gegenüber liegenden Seiten des Griffelements (14) angeordnet sind.

2. Fahrradgriff gemäß Anspruch 1, **dadurch gekennzeichnet, dass** am Griffelement (14) ein Greifelement (11, 12, 13) angeordnet ist.

3. Fahrradgriff gemäß mindestens einem der vorhergehenden Ansprüche, **dadurch gekennzeichnet, dass** am Greifelement (11, 12, 13) in Fahrtrichtung nach vorne weisend mindestens eine Ausnehmung (21) ausgebildet ist.

4. Fahrradgriff gemäß mindestens einem der vorhergehenden Ansprüche, **dadurch gekennzeichnet, dass** am Greifelement (11, 12, 13) benachbart zum zweiten Bereich (16) eine Abflachung (22) ausgebildet ist.

5. Fahrradgriff gemäß mindestens einem der vorhergehenden Ansprüche, **dadurch gekennzeichnet, dass** am Greifelement (12, 13) benachbart zum zweiten Bereich (16) ein Auflageansatz (23a, 23b) ausgebildet ist.

6. Fahrradgriff gemäß mindestens einem der vorhergehenden Ansprüche, **dadurch gekennzeichnet, dass** auf der Oberfläche des Greifelements (11, 12, 13) Einkerbungen (24) angeordnet sind.

7. Fahrradgriff gemäß mindestens einem der vorhergehenden Ansprüche, **dadurch gekennzeichnet, dass** die Verbindung zwischen Griffelement (14) und Halteelement (40) so ausgebildet ist, dass die radiale Ausrichtung des Halteelements (40), bezogen auf die Längsachse des Fahrradlenkers, im Wesentlichen frei einstellbar ist.

8. Fahrradgriff gemäß mindestens einem der vorhergehenden Ansprüche, **dadurch gekennzeichnet, dass** eine vom Fahrradfahrer in das Griffelement (14) eingeleitete Kraft ausschließlich über den ersten Bereich (15) des Griffelements (14) in den Fahrradlenker und über die Verbindung des zweiten Bereichs (16) des Griffelements (14) mit dem Halteelement (40) über dieses auf den Fahrradlenker fließt.

9. Fahrradgriff **dadurch gekennzeichnet, dass** seine Komponenten aus einer Gruppe von Elementen ausgewählt sind, wobei diese Gruppe verschiedene Greifelemente (11, 12, 13) auf baugleichen Griffelementen (14) und verschiedene Halteelemente (40) enthält, die gemäß den vorherigen Ansprüchen ausgebildet und miteinander kombinierbar sind.

10. Verfahren zur Ausbildung eines Fahrradgriffes nach einem der vorhergehenden Ansprüche mit den Schritten:
Auswahl eines Griffelementes (14) aus einem Herstellerbaukasten;
Auswahl eines Halteelementes (40) aus einem Herstellerbaukasten;
Verbinden des ausgewählten Griffelementes und des ausgewählten Halteelementes miteinander und mit einem Fahrradlenker.

## Claims

1. Bicycle handle bar grip, especially for mountain bikes, with a tubular grip device (14) and a holding device (40) for being attached to a bicycle handle bar, wherein as well the grip device (14) as the holding device (40) have a first section (15, 45) respectively, with which they are connectable to the bicycle handle bar, **characterized in that**
as well the grip device (14) as the holding device (40) have a second section (16, 46) respectively, with which they are connected to each other, wherein
the first section (15) and the second section (16) of the grip device (14) are located on opposite sides of the grip device (14).

2. Bicycle handle bar grip according to claim 1, **characterized in that** a gripping element (11, 12, 13) is arranged at the grip device (14).

3. Bicycle handle bar grip according to at least one of the preceding claims,
**characterized in that**
at least one recess (21) pointing forwards in the direction of travel is formed at the gripping element (11, 12, 13).

4. Bicycle handle bar grip according to at least one of the preceding claims,
**characterized in that**
a flattening (22) neighboring the second section (16) is formed at the gripping element (11, 12, 13).

5. Bicycle handle bar grip according to at least one of the preceding claims,
**characterized in that**
a supporting portion (23a, 23b) neighboring the second section (16) is formed at the gripping element (12, 13).

6. Bicycle handle bar grip according to at least one of the preceding claims,
**characterized in that**
notches (24) are arranged on the surface of the gripping element (11, 12, 13)

7. Bicycle handle bar grip according to at least one of the preceding claims,
**characterized in that**
the connection between the grip device (14) and the holding device (40) is formed in such a way that the radial alignment of the holding device (40) is essentially freely adjustable with regard to the longitudinal axis of the bicycle handle bar.

8. Bicycle handle bar grip according to at least one of the preceding claims,
**characterized in that**
a force induced into the grip device (14) by the bicyclist flows to the bicycle handle bar exclusively via the first section (15) of the grip device (14) and via the connection of the second section (16) of the grip device (14) and the holding device (40) through this to the bicycle handle bar.

9. Bicycle handle bar grip **characterized in that**
its constituents are selected out of the group of elements, wherein this group includes several gripping elements (11, 12, 13) on structurally identical grip devices (14) and several holding devices (40), which are formed according to the preceding claims and can be combined with each other.

10. Method for forming a bike handle bar according to one of the preceding claims comprising the steps:
selecting a grip device (14) out of a manufacturer's construction kit; selecting a holding device (40) out of a manufacturer's construction kit; connecting the selected grip device and the selected holding device to each other and to a bicycle handle bar.

## Revendications

1. Poignée de guidon d'une bicyclette, particulièrement pour des VTT, comprenant un dispositif de poignée tubulaire (14) et un dispositif de prise (40) pour être attaché à un guidon d'une bicyclette, le dispositif de poignée (14) et le dispositif de prise (40) ayant respectivement une première zone (15, 45), dans laquelle ils sont cannoctables au guidon de la bicyclette, et
**caractérisée par le fait que**
autant le dispositif de poignée (14) que le dispositif de prise (40) ont respectivement une deuxième zone (16, 46), dans laquelle ils sont connectés l'un à l'autre,
la première zone (15) et la deuxième zone (16) du dispositif de poignée (14) étant disposés sur des côtés opposées du dispositif de poignée (14).

2. Poignée de guidon d'une bicyclette selon revendication 1, **caractérisée par le fait que**
un élément de préhension (11, 12, 13) est disposé sur le dispositif de poignée (14).

3. Poignée de guidon d'une bicyclette selon au moins l'une des revendications précédentes, **caractérisée par le fait que**
une exclusion (21) est formée sur l'élément de préhension (11, 12, 13) au sens de la marche.

4. Poignée de guidon d'une bicyclette selon au moins l'une des revendications précédentes, **caractérisée par le fait que**
un tassement (22) est formé sur l'élément de préhension (11, 12, 13) voisin à la deuxième zone (16).

5. Poignée de guidon d'une bicyclette selon au moins l'une des revendications précédentes, **caractérisée par le fait que**
un épaulement de support (23a, 23b) est formé sur l'élément de préhension (12, 13) voisin à la deuxième zone (16).

6. Poignée de guidon d'une bicyclette selon au moins l'une des revendications précédentes, **caractérisée par le fait que**
des rainures (24) sont disposées sur la surface de l'élément de préhension (11, 12, 13).

7. Poignée de guidon d'une bicyclette selon au moins l'une des revendications précédentes, **caractérisée par le fait que**
la connexion entre le dispositif de poignée (14) et le dispositif de prise (40) sont formés de la sorte que l'alignement radiale du dispositif de prise (40) est ajustable essentiellement librement, relatif à l'axe longitudinale du guidon de la bicyclette.

8. Poignée de guidon d'une bicyclette selon au moins l'une des revendications précédentes, **caractérisée par le fait que**
une force induit par le cycliste exclusivement sur la première zone (15) du dispositif de poignée (14) dans le guidon de la bicyclette sur la connexion de la deuxième zone (16) du dispositif de poignée (14) et du dispositif de prise (40) flue via celui-ci dans le guidon de la bicyclette.

9. Poignée de guidon d'une bicyclette selon au moins l'une des revendications précédentes, **caractérisée par le fait que**
ses composants sont sélectionnés d'une groupe des éléments comprenant différents éléments de préhension (11, 12, 13) sur des dispositifs de poignée (14) identiquement construits et différents dispositifs de prise (40), qui sont formés selon des revendications précédentes et sont combinable entre eux.

10. Méthode pour la formation d'une poignée de guidon d'une bicyclette selon l'une des revendications précédentes, comprenant les étapes:
sélection d'un dispositif de poignée (14) d'un kit de construction de fabricant;
sélection d'un dispositif de prise (40) d'un kit de construction de fabricant;
connexion du dispositif de poignée sélectionné et du dispositif de prise sélectionné entre eux et avec un guidon d'une bicyclette.
